# EUROPEAN PATENT SPECIFICATION

(11) **EP 4 292 894 B1**
(45) Date of publication and mention of the grant of the patent: **29.01.2025**
(21) Application number: 22179131.2
(22) Date of filing: 15.06.2022
(51) Int. Cl.: B60T 17/08, B60T 17/16

(54) **SPRING BRAKE ACTUATOR COMPRISING FLEXIBLE SEGMENTS FOR PROVIDING A SNAP-FIT CONNECTION, AND COMMERCIAL VEHICLE COMPRISING A RESPECTIVE SPRING BRAKE ACTUATOR**
FEDERBREMSZYLINDER MIT FLEXIBLEN SEGMENTEN ZUR BEREITSTELLUNG EINER SCHNAPPVERBINDUNG SOWIE NUTZFAHRZEUG MIT EINEM ENTSPRECHENDEN FEDERSPEICHERBREMSZYLINDER
ACTIONNEUR DE FREIN À RESSORT COMPRENANT DES SEGMENTS FLEXIBLES POUR LA FOURNITURE D'UNE CONNEXION ENCLIQUETABLE ET VÉHICULE UTILITAIRE COMPRENANT UN ACTIONNEUR DE FREIN À RESSORT CORRESPONDANT

(43) Date of publication of application: 20.12.2023
(73) Proprietor: ZF CV Systems Europe BV, 1170 Brüssel (BE)
(72) Inventor: FLISEK, Filip, 51-180 Wroclaw (PL)
(74) Representative: Ohlendorf, Henrike

(56) References cited:
- EP-A1- 0 575 830
- FR-A- 1 219 395
- FR-A1- 2 475 712
- FR-A1- 3 060 726
- US-A- 4 850 263
- US-A1- 2008 244 879

## Description

The invention relates to a spring brake actuator providing a service brake function and a parking brake function, and to a commercial vehicle comprising a respective spring brake actuator. The document EP0575830A1 describes a state of the art park brake cylinder snap connection, without cuts.

Spring brake actuators are widely used in compressed air brake systems of large vehicles, for example of commercial vehicles like heavy trucks, buses, and trailers. A spring brake actuator is operated using compressed air provided by a compressed-air supply container, which is filled by a compressor. The spring brake actuator comprises a service chamber, a parking chamber, and at least one diaphragm, which moves a push rod to operate a disc brake or a drum brake of the vehicle when the service chamber is filled with compressed air during a braking action initiated by a respective driver of the vehicle.

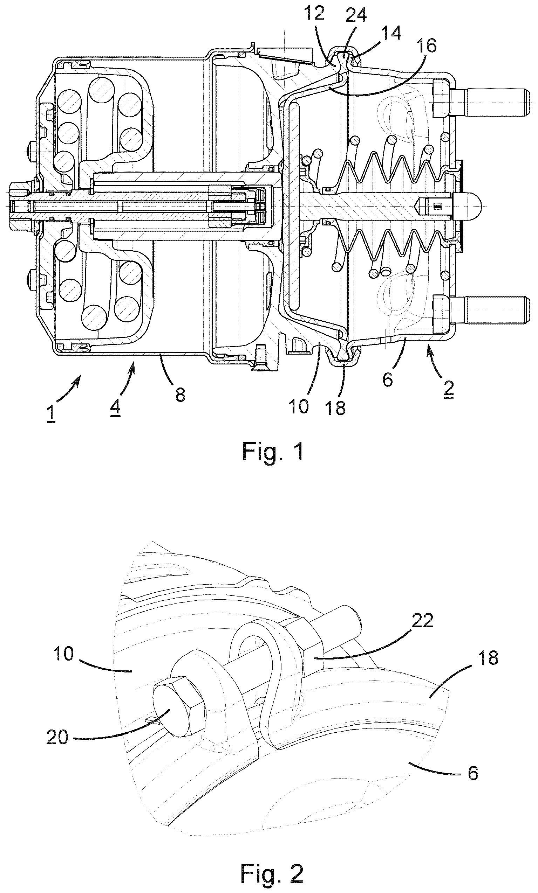

A commonly used spring brake actuator 1 comprises a service brake part 2 and a parking brake part 4, as depicted in Fig. 1 in a cross section. The service brake part 2 comprises a service chamber cover 6 and the parking brake part 4 comprises a parking chamber cover 8, wherein both parts 2 and 4 are conjoined by a housing base 10. The housing base 10 and the service chamber cover 6 each comprise a flange lip 12, respectively 14, wherein a diaphragm 16 is clamped between the two flange lips 12 and 14 using a removable clamp ring 18. The diaphragm 16 may in particular be a rubber diaphragm comprising an edge 24, which is deformed when the clamp ring 18 is fixed at the spring brake actuator 1. The clamp ring 18 can be removed and, therefore, allows an easy replacement of the diaphragm 16 by a service person in case of wear of the diaphragm 16.

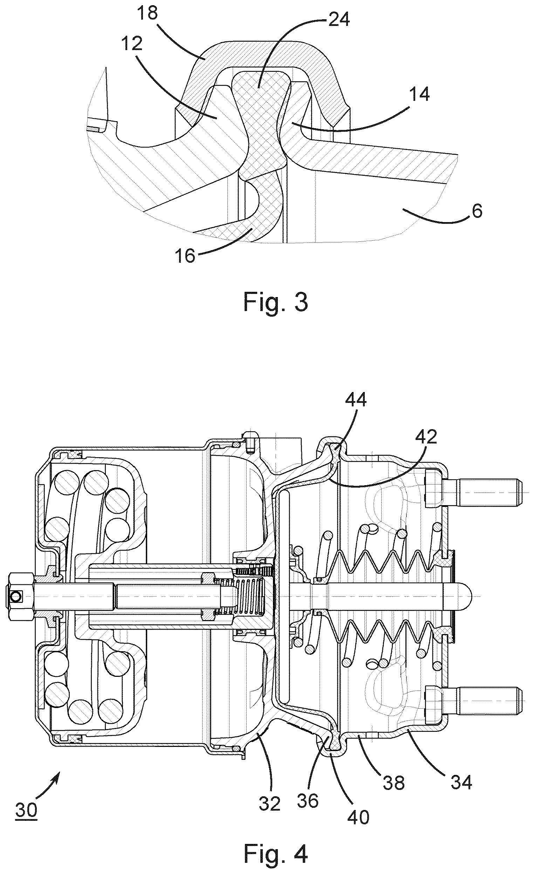

The clamp ring 18 is a metal ring and is mounted at the spring brake actuator 1 using a screw 20 and a nut 22, Fig. 2. The clamp ring 18 with the screw 20 and the nut 22 provide a secure mechanical connection. A tightness for the service brake part 2 is ensured by the mechanical deformation of the edge 24 of the diaphragm 16, caused by forces generated when the screw 20 and the nut 22 are screwed together. Fig. 3 shows in detail in a cross section how the edge 24 of the diaphragm 16 is clamped by the clamp ring 18 between the flange lips 12 and 14.

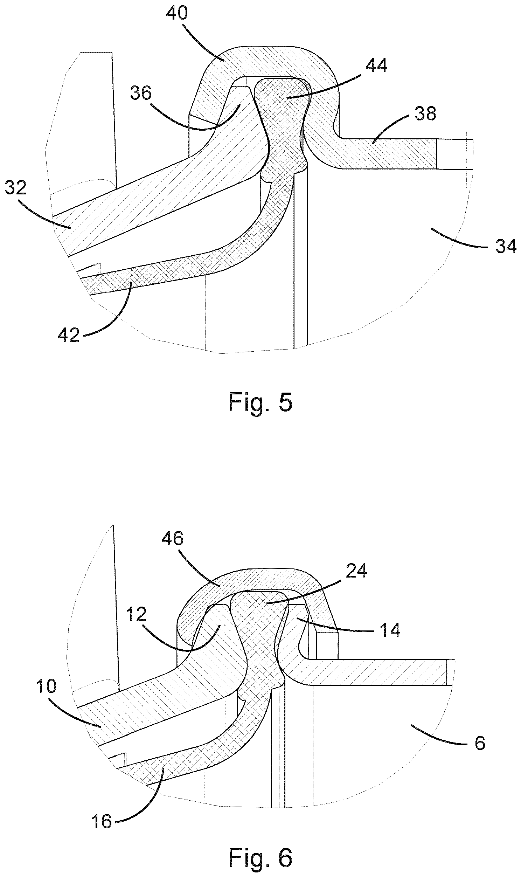

Known are also mechanical connections, which provide a permanent connection between a housing base 32 and a service chamber cover 34 of a spring brake actuator 30, as shown in Fig. 4 in a cross section. The housing base 32 comprises a flange lip 36 and the service chamber cover 34 comprises an end 38 with an extension 40. To connect the housing base 32 with the service chamber cover 34, the extension 40 is bent over the flange lip 36 and an edge 44 of a diaphragm 42, as shown in more detail in Fig. 5. This connection is known as rolling and also provides a secure mechanical connection but does not allow an easy replacement of the diaphragm 42.

Another permanent connection, in an embodiment for the housing base 10 and the service chamber cover 6 of Fig. 1, is illustrated in Fig. 6 in a cross section. For connecting the service chamber cover 6 with the housing base 10, an additional ring 46 is used, which is crimped for pressing the flange lip 12 of the housing base 10, the flange lip 14 of the service chamber cover 6, and the edge 24 of the diaphragm 16 together. The crimp connection also provides a secure mechanical connection between the housing base 10 and the service chamber cover 6, but is a more complicated assembly compared with the embodiment shown in Figs. 1-3, and the ring 46 cannot be reused when removed from the spring brake actuator 1.

It is an object of the present invention to provide a spring brake actuator having an improved assembly.

The invention is as set out in the independent claims 1 and 13. Preferred embodiments are defined by the dependent claims.

The spring brake actuator comprises a service brake part and a parking brake part conjoined by a housing base of the spring brake actuator, wherein the service brake part comprises a service chamber cover, a diaphragm, a service chamber, and a push rod for providing a service brake function. The service chamber cover comprises an outside wall with a rim for connecting the service chamber cover with a flange lip of the housing base, wherein the rim comprises cuts for providing a snap-fit connection with the flange lip.

In a preferred embodiment, the cuts divide the rim into several flexible segments.

In another preferred embodiment, the segments are movable in a diametral direction.

In another preferred embodiment, the segments each comprise a bent end designed to snap over the flange lip of the housing base when the service brake part is mounted with the service chamber cover at the housing base.

In another preferred embodiment, the bent ends are movable in a direction perpendicular to a center symmetry axis of the spring brake actuator.

In another preferred embodiment, the bent ends have a form of a "U" having an open side directed in a direction away from the center symmetry axis.

In another preferred embodiment, the cuts are co-parallel with regard to the center symmetry axis.

In another preferred embodiment, the flange lip of the housing base and the rim of the service chamber cover both have a rotational symmetry with regard to the center symmetry axis.

In another preferred embodiment, the flange lip of the housing base comprises a pin directing in a direction to the segments, which pin has a diameter that is smaller than a width of the cuts.

The pin is positioned particularly at the flange lip such that the pin slips into one of the cuts when the service chamber cover is mounted at the housing base at a correct angular position of components of the housing base with regard to the service chamber cover.

In another preferred embodiment, the parking brake part comprises a parking chamber cover, a ram assembly, a parking chamber, and a compression spring for providing a parking brake function and an emergency brake function.

The spring brake actuator is in particular a component of a compressed air brake system of a commercial vehicle.

The snap-fit connection leads to a simplified assembly when mounting the service brake part at the housing base. Any additional components, like clamp ring, bolt and nut, or complicated processes like rolling or crimp ring are reduced and replaced with the snap-fit connection.

The invention defines further a commercial vehicle comprising a respective spring brake actuator.

Preferred embodiments of the invention are explained in more detail below by way of example with reference to schematic drawings, which show:
- Fig. 1: a spring brake actuator according to prior art in a cross section, comprising a clamp ring connection;
- Fig. 2: the clamp ring connection of the spring brake actuator of Fig. 1;
- Fig. 3: the clamp ring connection of Fig. 2 in a cross section;
- Fig. 4: a spring brake actuator according to prior art in a cross section, comprising a permanent connection known as rolling;
- Fig. 5: the permanent connection of the spring brake actuator of Fig. 4 in a cross section;
- Fig. 6: a crimp connection for the spring brake actuator of Fig. 1 in a cross section;
- Fig. 7: a spring brake actuator according to the invention, comprising a snap-fit connection;
- Fig. 8: the spring brake actuator of Fig. 7 in a side view;
- Fig. 9: a detail of the snap-fit connection of the spring brake actuator of Fig. 7 in a cross section; and
- Fig. 10: a detail of the snap-fit connection of the spring brake actuator of Fig. 7, showing a pin of a flange lip of the spring brake actuator.

The present description illustrates the principles of the present invention. It will thus be appreciated that those skilled in the art will be able to devise various arrangements that, although not explicitly described or shown herein, embody the principles of the invention and are included within its scope.

All examples and conditional language recited herein are intended for instructional purposes to aid the reader in understanding the principles of the invention and the concepts contributed by the inventors to furthering the art and are to be construed as being without limitation to such specifically recited examples and conditions. Moreover, all statements herein reciting principles, aspects, and embodiments of the invention, as well as specific examples thereof, are intended to encompass both structural and functional equivalents thereof.

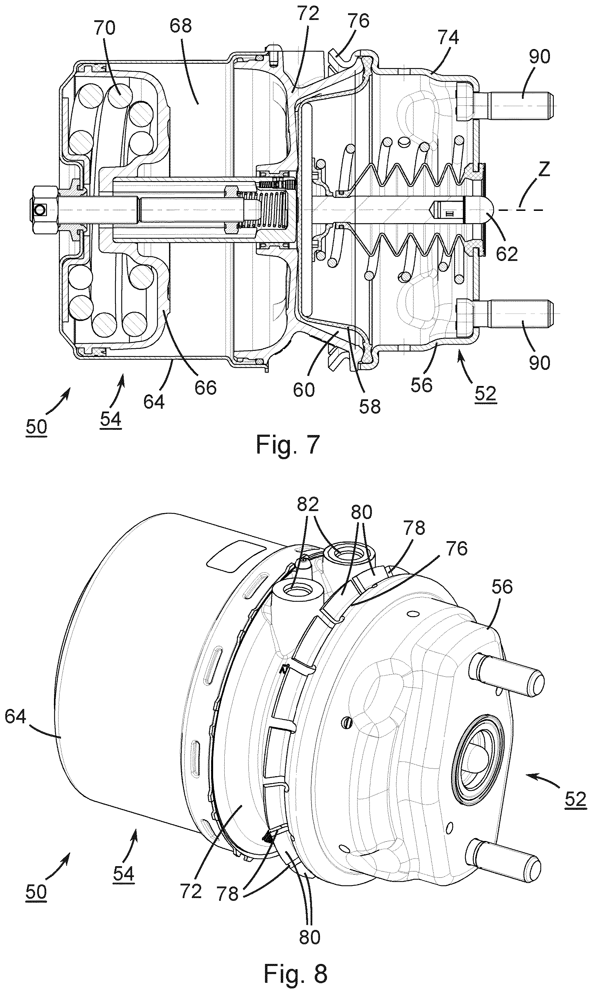

Fig. 7 depicts a spring brake actuator 50 in a cross section comprising a service brake part 52 and a parking brake part 54. The service brake part 52 comprises a service chamber cover 56, a diaphragm 58, a service chamber 60, and a push rod 62 for providing a service brake function. The parking brake part 54 comprises a parking chamber cover 64, a ram assembly 66, a parking chamber 68, and a compression spring 70 for providing a parking brake function and an emergency brake function. The service brake part 52 and the parking brake part 54 are conjoined by a housing base 72 of the spring brake actuator 50. The spring brake actuator 50 comprises a center symmetry axis Z.

The spring brake actuator 50 is in particular applicable for a commercial vehicle and further comprises two threaded bolts 90, via which the spring brake actuator 50 can be fixed at the commercial vehicle.

The service chamber cover 56 has a cylindrical form like a pot and includes an outside wall 74 with a rim 76 for connecting the service chamber cover 56 with the housing base 72. The rim 76 provides a function of a snap-fit connection for the service chamber cover 56 and the housing base 72, which allows a fast assembly and disassembly of the service chamber cover 56 at the spring brake actuator 50.

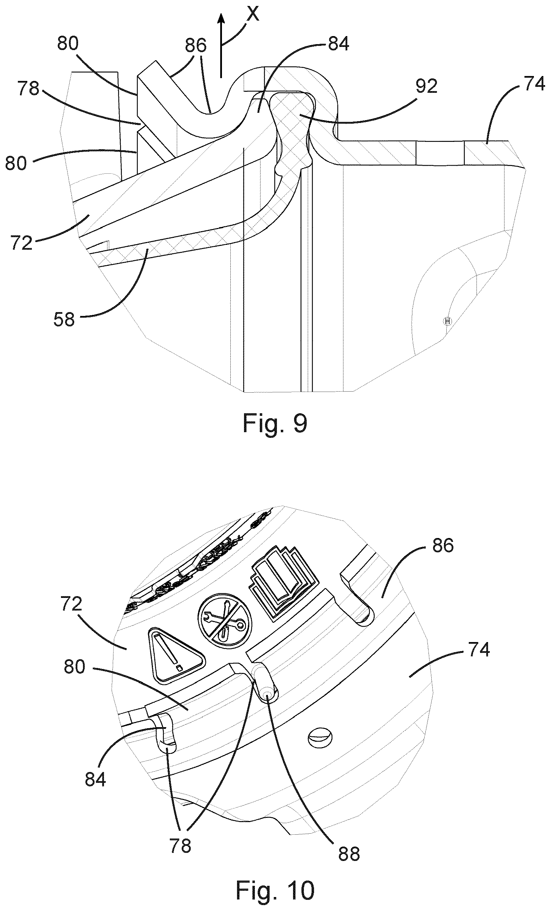

The rim 76 includes cuts 78 dividing the rim 76 into several or a multitude of segments 80, as depicted in Fig. 8. Fig. 8 shows the spring brake actuator 50 in a side view with the service chamber cover 56, the parking chamber cover 64, and the housing base 72. The housing base 72 comprises two ports 82 for compressed air for providing an operation of the spring brake actuator 50. The segments 80 surround a flange lip 84 of the housing base 72, Fig. 9, to provide a tight but reversible connection between the service chamber cover 56 and the housing base 72. Because of the cuts 78, the segments 80 are flexible and allow a diametral deformation.

The snap-fit connection, as provided by the segments 80 of the service chamber cover 56, is shown in more detail in Fig. 9 in a cross section. The segments 80 are flexible in a diametral direction X, perpendicular to the center symmetry axis Z and perpendicular to the outside wall 74 of the service chamber cover 56, so that the segments 80 snap over the flange lip 84 when the service brake part 52 is pressed with the service chamber cover 56 on the housing base 72.

The diaphragm 58 is particularly a rubber diaphragm comprising an edge 92, which is clamped between the outside wall 74 and deformed when the service brake part 52 is fixed at the spring brake actuator 1.

The flange lip 84 of the housing base 72 and the rim 76 of the service chamber cover 56 are in particular both rotational symmetric with regard to the center symmetry axis Z, Fig. 7, and the segments 80 each include a bent end 86, which ends 86 are movable in a direction X perpendicular to the symmetry axis Z. The flange lip 84 is directed essentially in the X direction, away from the center symmetry axis Z, and the ends 86 have a form of a "U", where an open side is directed essentially in the X direction, in a direction away from the centre symmetry axis Z, to provide a reversible, annular snap-fit connection. The cuts 78 are in particular co-parallel with regard to the center symmetry axis Z.

The flange lip 84 of the housing base 72 comprises a pin 88, Fig. 10, directing in a direction of the segments 80, which pin 88 has a diameter that is smaller than a width of the cuts 78. The pin 88 is positioned particularly in such way at the flange lip 84 that the pin 88 slips into one of the cuts 78 when the service brake part 52 is mounted with the service chamber cover 56 at the housing base 72. The pin 88 therefore allows only certain angular positions of the service chamber cover 56 with regard to the housing base 72. With the pin 88, a correct angular position of components of the spring brake actuator 50 can be provided, in particular a positioning of the ports 82 with regard to the bolts 90, when the spring brake actuator 50 is mounted at the commercial vehicle.

The snap-fit connection leads to a simplification of the assembly of the service brake part 52 at the housing base 72. Any additional components, like clamp ring, bolt and nut, or complicated processes like rolling or crimping with a crimp ring are reduced and replaced with the snap-fit connection. Because the segments 80 are flexible, an easy assembly is possible by positioning the service brake part 52 with the service chamber cover 56 at the flange lip 84 of the housing base 72 and pushing the ends 86 of the segments 80 at the flange lip 84. The bent ends 86 of the segments 80 are then briefly deflected in the X direction and snap over the flange lip 84. The bent ends 86 of the segments 80 and the flange lip 84 have a form such that a tight and secure mechanical connection is provided between the service brake part 52 and the housing base 72, in particular during the operation of the spring brake actuator 50.

The spring brake actuator is usable advantageously for a large vehicle, for example for a commercial vehicle, and is included particularly within a compressed air brake system, as described in the introduction of the specification.

Also other embodiments may be utilized by one skilled in the art without departing from the scope of the present invention. The invention resides therefore in the claims herein after appended.

### List of Reference signs (part of the specification):

- 1: spring brake actuator
- 2: service brake part
- 4: parking brake part
- 6: service chamber cover
- 8: parking chamber cover
- 10: housing base
- 12, 14: flange lips
- 16: diaphragm
- 18: clamp ring
- 20: screw
- 22: nut
- 24: edge of the diaphragm 16
- 30: spring brake actuator
- 32: housing base
- 34: service chamber cover
- 36: flange lip
- 38: end of the service chamber cover 34
- 40: extension of the end 36
- 42: diaphragm
- 44: edge of the diaphragm 42
- 46: ring
- 50: spring brake actuator
- 52: service brake part
- 54: parking brake part
- 56: service chamber cover
- 58: diaphragm
- 60: service chamber
- 62: push rod
- 64: parking chamber cover
- 66: ram assembly
- 68: parking chamber
- 70: compression spring
- 72: housing base
- 74: outside wall
- 76: rim
- 78: cuts
- 80: segments
- 82: ports
- 84: flange lip
- 86: ends of the segments
- 88: pin
- 90: bolts
- 92: edge of the diaphragm 58

- Z: center symmetry axis
- X: direction

## Claims

1. A spring brake actuator (50) comprising a service brake part (52) and a parking brake part (54) conjoined by a housing base (72) of the spring brake actuator (50), wherein
the service brake part (52) comprises a service chamber cover (56), a diaphragm (58), a service chamber (60), and a push rod (62) for providing a service brake function; and
the service chamber cover (56) comprises an outside wall (74) with a rim (76) for connecting the service chamber cover (56) with a flange lip (84) of the housing base (72); **characterized in that**
the rim (76) comprises cuts (78) for providing a snap-fit connection with the flange lip (84).

2. The spring brake actuator (50) of claim 1, wherein the cuts (78) divide the rim (76) into several flexible segments (80).

3. The spring brake actuator (50) of claim 1 or 2, wherein the segments (80) are movable in a diametral direction.

4. The spring brake actuator (50) of one of the preceding claims, wherein the segments (80) each comprise a bent end (86) designed to snap over the flange lip (84) of the housing base (72) when the service brake part (52) is mounted with the service chamber cover (56) at the housing base (72).

5. The spring brake actuator (50) of claim 4, wherein the bent ends (86) are movable in a direction (X) perpendicular to a center symmetry axis (Z) of the spring brake actuator (50).

6. The spring brake actuator (50) of claim 5, wherein the bent ends (86) have a form of a "U" having an open side directed in a direction (x) away from the center symmetry axis (Z).

7. The spring brake actuator (50) of claim 5 or 6, wherein the cuts (78) are co-parallel with regard to the center symmetry axis (Z).

8. The spring brake actuator (50) of one of claims 5 to 7, wherein the flange lip (84) of the housing base (72) and the rim (76) of the service chamber cover (56) both have a rotational symmetry with regard to the center symmetry axis (Z).

9. The spring brake actuator (50) of one of the preceding claims, wherein the flange lip (84) of the housing base (72) comprises a pin (88) directing in a direction to the segments (80), which pin (88) has a diameter that is smaller than a width of the cuts (78).

10. The spring brake actuator (50) of claim 9, wherein the pin (88) is positioned at the flange lip (84) to slip into one of the cuts (78) when the service chamber cover (56) is mounted at the housing base (72) at a correct angular position of components (82) of the housing base (72) with regard to the service chamber cover (65).

11. The spring brake actuator (50) of one of the preceding claims, wherein the parking brake part (54) comprises a parking chamber cover (64), a ram assembly (66), a parking chamber (68), and a compression spring (70) for providing a parking brake function and an emergency brake function.

12. The spring brake actuator (50) of one of the preceding claims, wherein the spring brake actuator (50) is a component of a compressed air brake system of a commercial vehicle.

13. A commercial vehicle comprising a spring brake actuator (50) according to one of the preceding claims.

## Patentansprüche

1. Federspeicherbremszylinder (50), umfassend einen Betriebsbremsenteil (52) und einen Feststellbremsenteil (54), die durch eine Gehäusebasis (72) des Federspeicherbremszylinders (50) verbunden sind, wobei
der Betriebsbremsenteil (52) eine Betriebskammerabdeckung (56), eine Membran (58), eine Betriebskammer (60) und eine Schubstange (62) zum Bereitstellen einer Betriebsbremsfunktion umfasst; und
die Betriebskammerabdeckung (56) eine Außenwand (74) mit einem Rand (76) zum Verbinden der Betriebskammerabdeckung (56) mit einer Flanschlippe (84) der Gehäusebasis (72) umfasst; **dadurch gekennzeichnet, dass**
der Rand (76) Einschnitte (78) zum Bereitstellen einer Schnappverbindung mit der Flanschlippe (84) umfasst.

2. Federspeicherbremszylinder (50) nach Anspruch 1, wobei die Einschnitte (78) den Rand (76) in mehrere flexible Segmente (80) unterteilen.

3. Federspeicherbremszylinder (50) nach Anspruch 1 oder 2, wobei die Segmente (80) in einer diametralen Richtung beweglich sind.

4. Federspeicherbremszylinder (50) nach einem der vorstehenden Ansprüche, wobei die Segmente (80) jeweils ein gebogenes Ende (86) umfassen, das entworfen ist, um über die Flanschlippe (84) der Gehäusebasis (72) zu schnappen, wenn der Betriebsbremsenteil (52) mit der Betriebskammerabdeckung (56) an der Gehäusebasis (72) montiert ist.

5. Federspeicherbremszylinder (50) nach Anspruch 4, wobei die gebogenen Enden (86) in einer Richtung (X) beweglich sind, die senkrecht zu einer zentralen Symmetrieachse (Z) des Federspeicherbremszylinders (50) verläuft.

6. Federspeicherbremszylinder (50) nach Anspruch 5, wobei die gebogenen Enden (86) eine Form eines "U" aufweisen, das eine offene Seite aufweist, die in eine Richtung (x) weg von der zentralen Symmetrieachse (Z) gerichtet ist.

7. Federspeicherbremszylinder (50) nach Anspruch 5 oder 6, wobei die Einschnitte (78) in Bezug auf die zentrale Symmetrieachse (Z) co-parallel sind.

8. Federspeicherbremszylinder (50) nach einem der Ansprüche 5 bis 7, wobei die Flanschlippe (84) der Gehäusebasis (72) und der Rand (76) der Betriebskammerabdeckung (56) beide eine Rotationssymmetrie in Bezug auf die zentrale Symmetrieachse (Z) aufweisen.

9. Federspeicherbremszylinder (50) nach einem der vorstehenden Ansprüche, wobei die Flanschlippe (84) des Gehäusebodens (72) einen Stift (88) umfasst, der in einer Richtung zu den Segmenten (80) gerichtet ist, wobei der Stift (88) einen Durchmesser aufweist, der kleiner ist als eine Breite der Einschnitte (78).

10. Federspeicherbremszylinder (50) nach Anspruch 9, wobei der Stift (88) an der Flanschlippe (84) positioniert ist, um in einen der Einschnitte (78) zu gleiten, wenn die Betriebskammerabdeckung (56) an der Gehäusebasis (72) in einer korrekten Winkelposition der Komponenten (82) der Gehäusebasis (72) in Bezug auf die Betriebskammerabdeckung (65) montiert ist.

11. Federspeicherbremszylinder (50) nach einem der vorstehenden Ansprüche, wobei der Feststellbremsenteil (54) eine Feststellkammerabdeckung (64), eine Stößelanordnung (66), eine Feststellkammer (68) und eine Druckfeder (70) zum Bereitstellen einer Feststellbremsfunktion und einer Notbremsfunktion umfasst.

12. Federspeicherbremszylinder (50) nach einem der vorstehenden Ansprüche, wobei der Federspeicherbremszylinder (50) eine Komponente eines Druckluftbremssystems eines Nutzfahrzeugs ist.

13. Nutzfahrzeug, umfassend einen Federspeicherbremszylinder (50) nach einem der vorstehenden Ansprüche.

## Revendications

1. Actionneur de frein à ressort (50) comprenant une partie de frein de service (52) et une partie de frein de stationnement (54) reliées par une base de boîtier (72) de l'actionneur de frein à ressort (50), dans lequel
la partie de frein de service (52) comprend un couvercle de chambre de service (56), un diaphragme (58), une chambre de service (60) et une tige de poussée (62) pour fournir une fonction de frein de service ; et
le couvercle de chambre de service (56) comprend une paroi extérieure (74) avec un rebord (76) pour relier le couvercle de chambre de service (56) à une lèvre de bride (84) de la base de boîtier (72) ;
**caractérisé en ce que**
le rebord (76) comprend des entailles (78) pour fournir une liaison par encliquetage avec la lèvre de bride (84).

2. Actionneur de frein à ressort (50) selon la revendication 1, dans lequel les entailles (78) divisent le rebord (76) en plusieurs segments flexibles (80).

3. Actionneur de frein à ressort (50) selon la revendication 1 ou 2, dans lequel les segments (80) sont mobiles dans une direction diamétrale.

4. Actionneur de frein à ressort (50) selon l'une des revendications précédentes, dans lequel les segments (80) comprennent chacun une extrémité courbée (86) conçue pour s'encliqueter sur la lèvre de bride (84) de la base de boîtier (72) lorsque la partie de frein de service (52) est montée avec le couvercle de chambre de service (56) au niveau de la base de boîtier (72).

5. Actionneur de frein à ressort (50) selon la revendication 4, dans lequel les extrémités courbées (86) sont mobiles dans une direction (X) perpendiculaire à un axe de symétrie central (Z) de l'actionneur de frein à ressort (50).

6. Actionneur de frein à ressort (50) selon la revendication 5, dans lequel les extrémités courbées (86) ont la forme d'un « U » présentant un côté ouvert orienté dans une direction (x) opposée à l'axe de symétrie central (Z).

7. Actionneur de frein à ressort (50) selon la revendication 5 ou 6, dans lequel les entailles (78) sont co-parallèles par rapport à l'axe de symétrie central (Z).

8. Actionneur de frein à ressort (50) selon l'une des revendications 5 à 7, dans lequel la lèvre de bride (84) de la base de boîtier (72) et le rebord (76) du couvercle de chambre de service (56) ont tous deux une symétrie de rotation par rapport à l'axe de symétrie central (Z).

9. Actionneur de frein à ressort (50) selon l'une des revendications précédentes, dans lequel la lèvre de bride (84) de la base de boîtier (72) comprend une goupille (88) orientée dans une direction vers les segments (80), laquelle goupille (88) a un diamètre inférieur à la largeur des entailles (78).

10. Actionneur de frein à ressort (50) selon la revendication 9, dans lequel la goupille (88) est positionnée sur la lèvre de bride (84) pour se glisser dans l'une des entailles (78) lorsque le couvercle de chambre de service (56) est monté sur la base de boîtier (72) à une position angulaire correcte des composants (82) de la base de boîtier (72) par rapport au couvercle de chambre de service (65).

11. Actionneur de frein à ressort (50) selon l'une des revendications précédentes, dans lequel la partie de frein de stationnement (54) comprend un couvercle de chambre de stationnement (64), un ensemble de vérin (66), une chambre de stationnement (68) et un ressort de compression (70) pour fournir une fonction de frein de stationnement et une fonction de frein d'urgence.

12. Actionneur de frein à ressort (50) selon l'une des revendications précédentes, dans lequel l'actionneur de frein à ressort (50) est un composant d'un système de freinage à air comprimé d'un véhicule utilitaire.

13. Véhicule utilitaire comprenant un actionneur de frein à ressort (50) selon l'une des revendications précédentes.
